# EUROPEAN PATENT APPLICATION

(11) **EP 0 627 599 A2**
(43) Date of publication of application: **07.12.1994**
(21) Application number: 94103646.9
(22) Date of filing: 10.03.1994
(51) Int. Cl.: F24C 3/06

(54) **Gas-fired radiating cooktop**

(30) Priority: 02.04.1993 IT PN930023
(71) Applicant: ZANUSSI GRANDI IMPIANTI S.p.A., I-33170 Pordenone (IT)
(72) Inventor: Levi, Bruno, I-33082 Azzano Decimo, Pordenone (IT)
(74) Representative: Giugni, Valter

(57) **Abstract**

Gas-fired radiating cooktop provided with covered burners, wherein at least two burners, ie. a front burner (12) and a rear burner (13), are housed in a single combustion chamber (26) which makes up also the flue gas exhaust conduit for both burners.
Construction of the cooktop is thereby simplified to a considerable extent, whereas function, efficiency and operability of the burners are by no means affected.

## Description

This invention relates to gas-fired radiating cooktops with covered or sealed burners for cooking food and, more particularly, it refers to the combustion chamber lying underneath said cooktops, as well as to the exhaust conduits which are provided there for flue gases.

Currently available cooktops of the above cited type generally use burners of the surface combustion type, wherein each burner is supplied through a Venturi tube that is arranged to supply a gas/air mixture in the required proportions for a correct combustion thereof. Furthermore, each of said burners is accomodated in a combustion chamber of its own, in which flame surveillance sensor means and ignition electrodes are mounted as well. The cooktop itself is sealed on its top surface by a plate, preferably of an appropriate glass-ceramic material that is substantially transparent to radiations, said plate acting as the pan supporting plate.

In this connection it shall further be pointed out that each combustion chamber is connected with the outside atmosphere through a flue gas exhaust conduit of its own. Until now, it has been a common rule in this particular sector to think that said flue gas exhaust conduits had actually to remain strictly separated and distinct from each other up to their respective outlet ports or to the chimney, fearing that the flue gas flow from a burner might have been such as to negatively affect in some way the regular combustion performance of the other burners and their corresponding ability of regularly exhausting their flue gases.

This technical prejudice has been instrumental in bringing about considerable limitations in the use and serious complications in the construction of these cooktops. As a matter of fact, flue gas exhaust conduits shall be provided with a very large cross-sectional flow area in view of assuring a correct outflow of said flue gases, and furthermore they shall all be arranged on the same plate, since each vertical deviation of their paths, for instance in order to step over a rear burner, brings about pressure losses that are certainly not sustainable on account of the very low combustion pressure values involved.

Therefore, the space which is normally available across the width dimensions of these cooktops for the flue gas exhaust conduits is usually not enough to allow for all such exhaust conduits to be accomodated indipendently in a side-by-side arrangement.

This is the reason why, for instance, current radiating cooktops with four cooking zones on their top surface, ie. capable of accomodating four pans on their top surface, are able to contain, at the most, three burners and a so-called heat recovery area, owing precisely to the above mentioned reasons in connection with the space and shape requirements of said flue gas exhaust conduits, and cannot therefore compete with correspnding gas-fired open-burner cooktops, or even with corresponding electric cook tops, which, for the same outer dimensions of their layout, are normally provided with four burners or hotplates.

All these practical problems connected with their operation and construction have until now restrained the success of gas-fired radiation-type cooktops with covered burners.

It is therefore a purpose of the present invention to solve all these problems by doing away with said technical prejudice requiring flue gas exhaust conduits running in a completely separated and distinct way.

The features of the cooktop according to the present invention are as basically claimed and described in the claims appended to this description.

Anyway, in order that the present invention may more readily be understood, along with its particular features and advantages, the following description is given, merely by way of non-limiting example, reference being made to the accompanying drawings in which:
- Figure 1 is a schematical perspective view of a cooktop according to the present invention;
- Figure 2 is a cross-sectional view along the lines II-II of the cooktop shown in Figure 1.

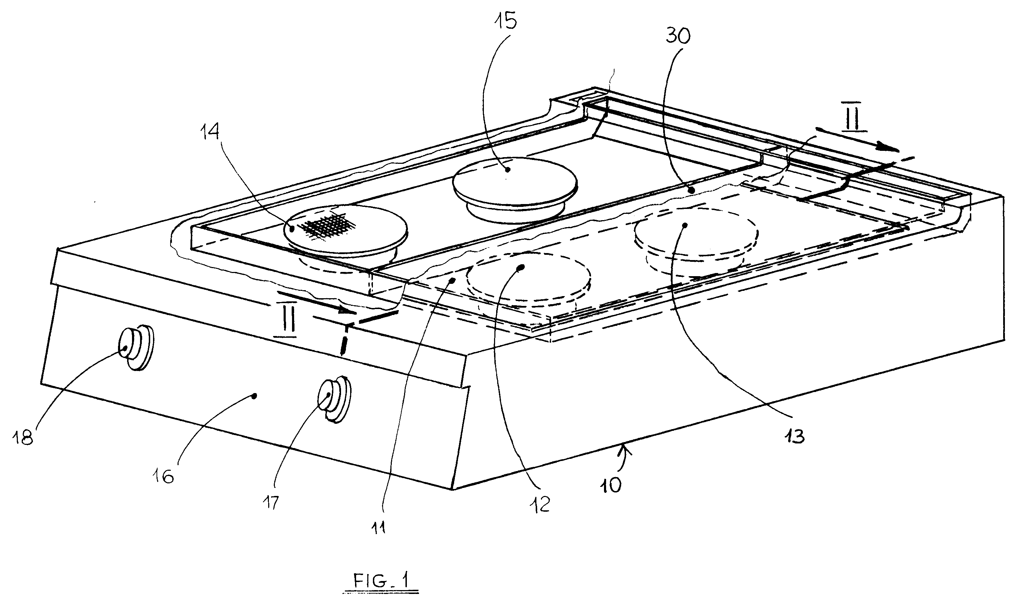

The gas-fired radiation-type cooktop with covered burners according to the present invention is shown, in a schematical perspective view, in Figure 1 and comprises substantially a box-like casing 10 which is closed on top by a plate 11, preferably made of a glass-ceramic plate.

Inside said box-like casing 10, underneath said plate 11, gas burners, for instance in a number of four gas burners 12, 13, 14 and 15 of the surface combustion type, are provided. As can be clearly seen in the Figure, said burners are substantially arranged in a two-by-two alignment, in a much similar way as for the heating elements of both gas-fired cooktops with open burners and cooktops with electric hotplates. It may in particular be noticed that the two front burners 12 and 14 are arranged in substantial alignment with the corresponding rear burners 13 and 15 in the lengthwise direction of the cooktop, ie. orthogonally with respect to the front side 16 of the same cooktop.

As usual, the control elements for the burners, of which only the adjusting knobs 17 and 18 are shown in the Figure, are provided as usual on the front side 16 of the cooktop.

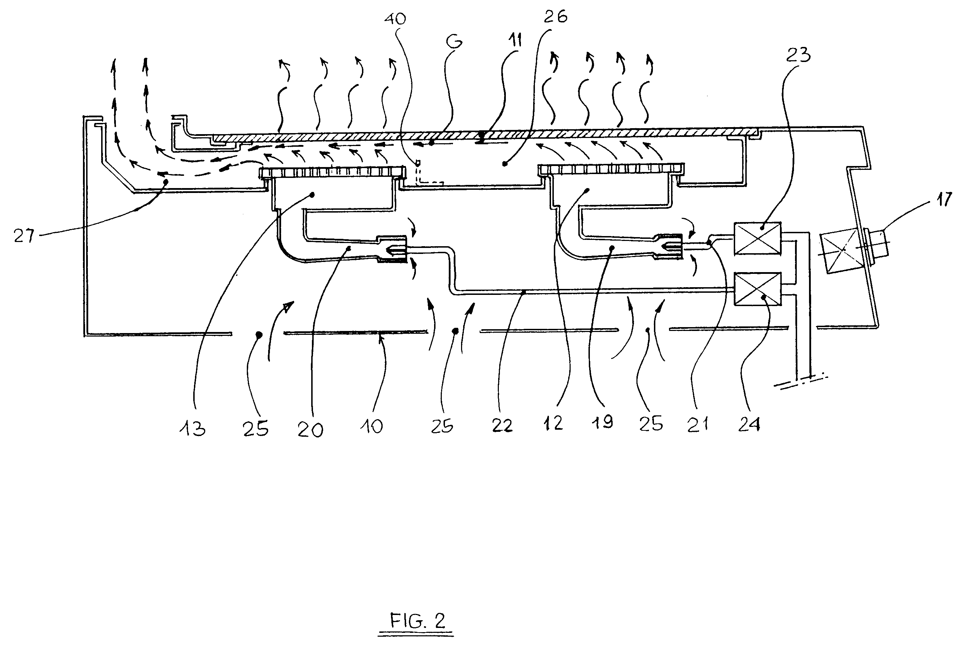

As it can best be seen in the cross-section illustration appearing in Figure 2, the burners 12 and 13 are supplied through respective Venturi tubes 19 and 20 to which the fuel gas arrives from respective conduits 21 and 22 that are provided with respective shut-off valves 23 and 24. The primary combustion air flows into the box-like casing 10 through a plurality of lower openings 25.

The burners 12 and 13 are mounted in a combustion chamber 26, which is formed inside the box-like casing 10 and from the bottom of which the heads of the same burners are actually protruding.

According to the present invention, the combustion chamber 26 is one and the same for all burners and it makes up itself a single and same flue gas exhaust conduit for all of the burners being arranged in the longitudinal flow path of flue gases.

The combustion chamber 26 is connected to a single chimney or flue riser 27 provided for letting the flue gases out into the outside atmosphere.

The operability of the solution according to the present invention, which, as it has been already emphasized, goes against a common technical prejudice, has been demonstrated experimentally and is substantially based on the observations set forth in the following.

Flue gases from the burners are very hot (approx. 700 to 800°C) and strongly tend to move according to a rising flow pattern. They therefore impinge on the lower surface of the plate 11 and start to flow underneath said plate toward the chimney or flue riser 27, thereby forming a relatively thin layer (arrow G, Figure 2). The layer of flue gases coming from a front burner (burner 12 in Figure 2) does not substantially affect or interfere with the combustion process taking place in the corresponding rear burner (burner 13 in Figure 2), since said flue gases keep flowing at a relatively high altitude underneath the lower surface of the plate 11. Should the longitudinally aligned burners be significantly approached to each other, it may be appropriate to provide a baffle 40 (shown with a dashed line in Figure 2) adapted to favour the rising movement of the flue gases from the front burner. Said baffle would also prove instrumental in decreasing heat radiations toward the user.

Furthermore, the rear burner is supplied through its own Venturi tube with the air-gas mixture in a correct proportion (ie. combustion air is solely provided as primary air, while there is no secondary air), so that its combustion atmosphere is not subject to vitiation problems. Finally, the layer of flue gases G is transparent to radiations, so that it does by no way affect the radiating capacity or effectiveness of the rear burner (13 in Figure 2).

It is of course appropriate that flow sections ensuring the passage of flue gases in the combustion chamber 26 and the chimney or flue riser 27 be sized accordingly, ie. by taking the total heat input rate of the burners 12 and 13 into due account. On the other hand, this is done most easily by increasing the height dimension of the combustion chamber and the chimney, or flue riser, without changing the width dimension thereof.

A baffle plate 30 is shown in Figure 2 to lengthwise separate the combustion chamber into two chambers, one of which is shown to include the front and rear burners 12 and 13, respectively, while the other one accomodates the front and rear burners 14 and 15, respectively. Now, this solution may actually prove to be preferable in some cases, but it is not absolutely necessary, since even a single combustion chamber for all of the burners provided in the cooktop will operate successfully, provided that it is appropriately sized according to the afore mentioned principles.

Conclusively, it can be said that the present invention teaches how to build a gas-fired cooktop provided with a a plurality of burners, at least two of which are arranged longitudinally within a single and same combustion chamber, which at the same time acts also as the flue gas exhaust conduit for all burners housed in said combustion chamber.

The solution according to the present invention represents a considerable simplification from the construction point of view, while the effective operation of the single burners is by no way affected by such a simplification. In practice, the combustion chamber and the flue gas exhaust conduit can in this way be built in the form of a single quickly, easily and cost-effectively manufacturable casing.

Even in the case that it is actually preferred to divide the combustion chamber by means of a baffle plate 30, its construction remains extremely simple, since it anyway enables the number of flue gas exhaust conduits to be reduced to a half as compared with the number of exhaust conduits usually needed in prior-art gas-fired cooktops of the considered kind.

Ultimately, however, the most important result achieved is the possibility of manufacturing gas-fired cooktops of the radiating type which have a number of covered or sealed burners equal to the usual number of heating elements provided in gas-fired cooktops with open-type burners or electrical cooktops.

## Claims

1. Gas-fired radiating cooktop with covered burners, comprising a box-like casing (10) closed on its top by a plate (11) of glass-ceramic or similar material, which defines at least a combustion chamber (26), a plurality of atmospheric burners (12, 13, 14, 15) of the surface combustion type being housed inside said box-like casing, said burners being supplied with air-gas mixture through respective Venturi tubes and related valves and being further controlled by control devices mounted on the front side of the casing (10), **characterized in that** said combustion chamber (26) accomodates at least two burners, namely a front burner (12) and a rear burner (13), and forms also one common flue gas exhaust conduit for said burners (12, 13) so that the flue gases of the front burner (12) flow over the rear burner (13).

2. Gas-fired radiating cooktop according to claim 1, **characterized in that** it includes at least four burners (12, 13, 14, 15) that are respectively aligned longitudinally in a two-by-two arrangement, said combustion chamber (26) being one and the same for all said burners.

3. Gas-fired radiating cooktop according to claim 2, **characterized in that** said combustion chamber (26) is divided into two chambers through the provision of a longitudinal baffle plate (30), each one of said chambers accomodating two burners, ie. a front burner (12 or 14) and a rear burner (13 or 15, respectively.

4. Gas-fired radiating cooktop according to any of the preceding claims, **characterized in that** in the case in which the front burner and the rear burner are brought closer to each other, a baffle means (40) is arranged in front of the rear burner, said baffle means (40) being adapted to favour the rising movement of the flue gas flow from the front burner toward the lower surface of the glass-ceramic plate (11).
